# DEMANDE DE BREVET EUROPEEN

(11) **EP 0 653 646 A1**
(43) Date de publication de la demande: **17.05.1995**
(21) Numéro de dépôt: 94118129.9
(22) Date de dépôt: 15.11.1994
(51) Int. Cl.: G01S 17/88, G01S 7/48

(54) **Dispositif optique d'aide à la conduite**

(30) Priorité: 17.11.1993 FR 9313738
(71) Demandeur: VALEO ELECTRONIQUE, 94000 Creteil (FR)
(72) Inventeur: Bourbin, Yannic, F-92290 Chatenay Malabry (FR)
(74) Mandataire: Gamonal, Didier

(57) **Abrégé**

La présente invention concerne un dispositif optique d'aide à la conduite.

Selon l'invention, un lidar est constitué par un échantillon de verre dopé à l'Erbium (5) et pompé par une fraction du flux lumineux (3) engendré par une lampe à décharge au xénon (1) avec un concentrateur (2).

L'ensemble est disposé dans un feu ou un projecteur d'éclairage dont il utilise les moyens et permet d'activer un récepteur (17) et une circuiterie générant des paramètres d'aide à la navigation (26).

## Description

La présente invention concerne un dispositif optique d'aide à la conduite, pour un véhicule automobile notamment. Elle exploite une technologie dénommée "lidar" et se place avantageusement dans un feu de signalisation ou un projecteur d'éclairage de véhicule.

Elle utilise aussi au moins une lampe à décharge, du genre remplie de Xénon ou d'un gaz du même genre, et, d'une manière générale, des technologies déjà éprouvées et relativement répandues dans le domaine de l'automobile, ce qui rend l'application de l'invention à ce domaine possible.

L'embarquement à bord de véhicules automobiles de moyens autonomes d'aide à la navigation est à ce jour considéré comme un axe de développement important visant à réduire le nombre de victimes des accidents de la circulation.

De tels moyens autonomes d'aide à la conduite sont par exemple décrits dans le document DE 42 00 057, et sont par exemple consititués par des moyens de signalisation d'information pour le conducteur et/ou des moyens de contrôle de la vitesse du véhicule.

Les moyens d'aide à la conduite liés à l'infrastructure routière seront aussi appelés à se développer mais ne sont pas abordés ici.

Parmi les moyens autonomes d'aide à la conduite embarqués à bord du véhicule, on peut distinguer les moyens actifs et les moyens passifs.

Ces derniers font généralement appel à des moyens de détection optronique, éventuellement à imagerie et assez généralement utilisant des bandes placées dans l'infrarouge proche (0,8µm < longueur d'onde < 2µm) ou lointain (bandes II et III). Un certain nombre de technologies sont actuellement possibles, mais peu sont susceptibles de tenir les contraintes de prix imposées dans le domaine de l'automobile.

C'set pourquoi la présente invention s'interesse aux moyens actifs d'aide à la conduite. Ces moyens actifs font appel à un éventail plus étendu de techniques mettant en jeu des ondes acoustiques, optiques ou radars. Appliquées au domaine de l'automobile et aux dispositifs anti-collision, ces technologies se résument bien souvent à une télémétrie, même si l'on peut encore envisager une mesure de la vitesse relative de l'obstacle par effet DOPPLER.

Ces techniques présentent des contraintes sur plusieurs critères qui sont déterminants :
- performances,
- encombrement,
- coûts,
- intégration dans le véhicule,
- synergie avec des organes pré-existants, etc.

On retiendra ainsi pour les radars l'utilisation tout temps en particulier à travers le brouillard ou la pluie.

Les variations de vitesse du son, en fonction des conditions atmosphériques, ainsi que la plus grande sensibilité potentielle à la pollution phonique des capteurs à base d'ultrasons, destinent ceux-ci à des solutions pour des classes à basse performance (sonars de reculs pour cars, camions, etc.).

L'invention exploite une technologie dénommée 〈〈 lidar 〉〉. L'encombrement et la directivité de l'antenne des lidars présentent un grand intérêt du fait qu'elle induit une plus grande simplicité du traitement du signal. Le problème technique résolu par la présente invention réside dans l'adaptation de cette technologie au domaine automobile de façon à respecter les contraintes énoncées ci-dessus.

Notamment, un des aspects essentiels de l'invention réside dans la conception d'une source pour lidar qui soit compatible avec ces contraintes spécifiques.

Parmi les candidats possibles entrant dans la réalisation de sources pour lidars, l'invention a cherché des solutions à état solide pour leur plus grande fiabilité, leur coût de production intrinsèquement plus faible allié à un coût de possession réduit. Si l'on s'intéresse à une solution lidar, comme dispositif anti-collision, on aura soin d'assurer la sécurité oculaire en sortie de pupille ou d'antenne de laser, pour des raisons évidentes, ce qui est une contrainte vis-à-vis du radar qui s'en affranchit totalement.

Il faut savoir en effet que les dommages oculaires sont principalement de deux types, à savoir, cornéens ou rétiniens. Les longueurs d'ondes supérieures à 2µm sont en général fortement absorbées par l'eau ou bien les substances composants la cornée et sont donc à proscrire dans la mesure du possible. Inversement, celles inférieures à 1µm environ traversent bien la cornée et se focalisent sur la rétine, rendant ainsi cette dernière vulnérable à une énergie ou une puissance crête trop importante. Il y a heureusement une plage assez restreinte où il est possible d'utiliser les lasers sans grand dommage pour l'oeil et elle est centrée autour de 1,54µm.

Pour illustrer ces considérations, les densités d'énergie maximales permises sont respectivement de 5µJ/cm² et 1J/cm² à 1,06µm et 1,54µm en entrée de pupille oculaire, ce qui représente une dynamique de 5 à 6 ordres de grandeur.

Les solutions technologiques à l'état solide permettant d'émettre en sécurité oculaire sont à l'heure actuelle les suivantes :
- les diodes laser à semi conducteur sur le système III-V InGaAsP/InP et employant des structures de confinement électronique à puits quantiques. Ces composants sont encore en cours de développement et on devrait s'attendre à voir leur rapport performances/coût augmenter considérablement dans les mois ou les années à venir ;
- les lasers RAMAN ; c'est le cas d'un laser YAG dopé au Néodyme pompant une cuve de méthane sous pression (30 - 50 bars) et permettant un transfert d'énergie sur le premier ordre Stokes (1,06µm -> 1,54µm). Si l'on sait faire des lasers YAG Nd à état solide, cette solution met néanmoins en jeu un gaz sous pression avec le danger d'explosion latent en cas d'accident. Cette solution est onéreuse et, de plus, limitée en cadence de répétition et en durée de vie ;
- les oscillateurs paramétriques optiques (OPO) qui sont certainement une voie ouvrant de très vastes horizons aux concepteurs et utilisateurs. Mettant en jeu des concepts avancés d'optique non linéaire, ils représentent technologiquement la solution la plus parfaite sur le plan des performances. Mais les matériaux qui sont susceptibles de rentrer dans leur composition sont encore mal maîtrisés, et ils coûteraient trop cher s'ils étaient produits en grande quantité ;
- les lasers à Erbium qui sont historiquement les premiers à être apparus, qui émettent à 1,54µm et dont on peut penser qu'ils sont à l'origne de bien des normes de sécurité oculaire, tant militaires que civiles. Leur rendement de pompage est maximal avec des lampes au Xénon et l'on essaie aussi aujourd'hui de les améliorer encore significativement avec des diodes de puissance à 980nm dont la structure tant d'indice optique que de confinement électronique fait appel à des matériaux contraints à puits quantiques. Aucune production de série pouvant conduire à des prix suffisamment bas n'existe à ce jour ; aussi les lampes au xénon vont-elles encore être les moyens de pompage de l'ion Er³⁺ que l'on trouve par exemple dans des matrices de verres au phosphate résistant bien à la chaleur, éventuellement en présence d'autres ions tels que le chrome qui, par des processus de transfert d'énergie entre niveaux électroniques contribuent à un meilleur rendement de pompage.

Les dimensions des lasers à ions terre rare tels le Néodyme ou l'Erbium peuvent être très variables, avec des cavités de l'ordre du mètre ou plus, tout comme du millimètre dans le cas des laser dits micro-chips. Ces derniers sont aujourd'hui activement développés au Etats-Unis pour leurs excellentes propriétés spectrales et modales qui rendent possible la détection hétérodyne, donc la mesure de la vitesse relative d'un obstacle par rapport à un véhicule.

La solution retenue par l'invention pour la réalisation de la source du lidar consiste à utiliser une lampe au xénon pour pomper de petits lasers Erbium, éventuellement micro-chips.

Selon une caractéristique essentielle de l'invention, visant à respecter les contraintes du domaine automobile précitées, l'invention utilise une lampe au Xénon déjà présente ou facile à mettre en oeuvre dans le véhicule.

En effet la présente invention concerne un dispositif optique d'aide à la conduite pour véhicule automobile notamment, ce dispositif comportant :
- au moins un générateur d'un faisceau laser dans une direction déterminée à une longueur d'onde et sous une énergie ou une puissance compatible avec la sécurité oculaire ;
- au moins une lampe à décharge du genre comportant un gaz rare, comme du Xénon ;
- un échantillon d'un matériau optique dopé à l'Erbium ou avec au moins un dopant destiné à conférer à l'échantillon de matériau optique des qualités d'émission lumineuse stimulée ;
- un système optique de concentration de flux lumineux généré par la lampe à décharge sur l'échantillon de matériau optique ;
- un système optique de sortie du faisceau laser ;
- et un récepteur de faisceau laser.

Du fait du développement actuel des lampes à décharge au xénon, dans le domaine de l'éclairage pour véhicules automobiles, l'application de l'invention au domaine de l'automobile est particulièrement avantageuse et est de nature à respecter les contraintes inhérentes à ce domaine.

Selon une autre caractéristique de l'invention le dispositif décrit ci-dessus est placé dans un projecteur du véhicule. Les avantages procurés par cette caractéristiques sont les suivants :
- assurer la protection du laser dans l'enceinte du projecteur ;
- aucune ouverture dans la carrosserie, ni précaution supplémentaire d'ajustement n'est à envisager par le constructeur pour diriger l'énergie servant à la télémétrie, ce qui n'est pas le cas du radar de type hyperfréquences ;
- puisqu'il y a deux phares dans une voiture, on peut éventuellement doubler ces lidars pour assurer plus de fiabilité ou bien augmenter les performances par multiplexage temporel des impulsions ;
- on peut aussi émettre à partir d'un phare et détecter dans l'autre en exploitant un schéma hétérodyne, ce qui permet d'éviter d'aveugler le détecteur lors du départ de l'impulsion.

On remarquera de plus que l'alimentation et le moyen de pompage du laser sont, par rapport à des dispositifs n'utilisant pas de lampe à décharge an Xénon comme source pour le lidar, ou bien "gratuits" puisque déjà présents dans le projecteur lorsque celui-ci comporte une telle lampe à décharge pour l'éclairage, ou bien susceptibles d'être produits dans des conditions et en quantités telles que leurs coûts sont rendus compatibles avec le marché de l'équipement automobile.

Selon une autre caractéristique de l'invention, le matériau optique dopé est un verre dopé à l'Erbium.

Selon une autre caractéristique de l'invention, le récepteur du faisceau laser est constitué par un photocomposant base sur les systèmes AsGa ou InP.

Selon une autre caractéristique de l'invention, le récepteur du faisceau laser est constitué par un générateur laser, par exemple à matériau dopé à l'Erbium, fonctionnant en amplificateur et recevant l'émission lumineuse induite par son éclairement laser.

Selon une autre caractéristique de l'invention, le dispositif comporte aussi un dispositif de contrôle déterminant les caractéristiques et le mode opératoire du générateur et du récepteur.

Selon une autre caractéristique de l'invention, il comporte aussi un dispositif de détection produisant des paramètres d'aide à la navigation, comme ceux basés sur la détection d'énergie rétrodiffusée ou rétroréfléchie par un milieu ou une cible disposée en face au moins du récepteur, le fonctionnement de ces mesures pouvant aussi se faire en mode DOPPLER.

On peut ainsi produire des paramètres d'aide à la navigation comme :
- la présence du brouillard,
- la localisation de cibles comme les bords de la route ou des véhicules voisins,
- la vitesse, l'accélération ou l'attitude soit du véhicule à bord duquel est embarqué le dispositif, soit de véhicules voisins, etc.

Selon une autre caractéristique de l'invention, la lampe à décharge est partagée entre la fonction d'éclairage et celle de pompage de la source laser, une optique étant destinée à produire un flux lumineux d'éclairage.

Selon une autre caractéristique de l'invention, le faisceau laser traverse aussi l'optique destinée à produire le flux lumineux d'éclairage.

D'autres caractéristiques et avantages de la présente invention seront mieux compris à l'aide de la description et des dessins annexés qui sont :
- la figure 1 : un schéma d'un premier mode de réalisation du dispositif de l'invention ;
- la figure 2 : un schéma d'un mode de réalisation d'un générateur d'un faisceau laser ;
- la figure 3 : un schéma d'un autre mode de réalisation d'un générateur d'un faisceau laser ;
- les figures 4 et 5 : des schémas d'application du dispositif de l'invention au domaine de l'automobile ;
- la figure 6 : un schéma d'un projecteur d'éclairage apte à recevoir un générateur laser selon l'invention.

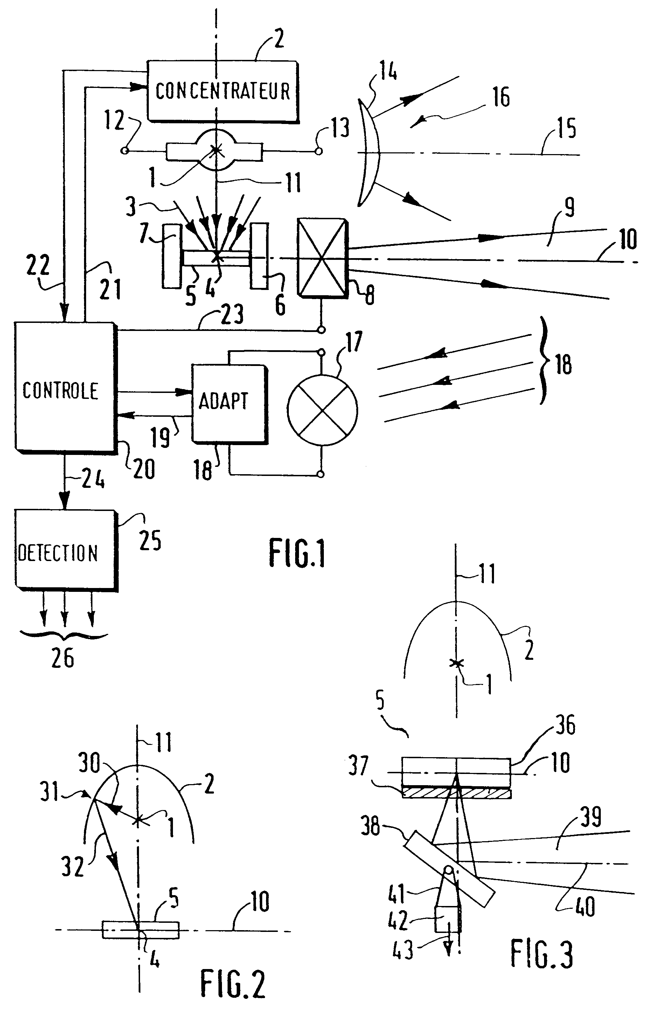

A la figure 1, on a représenté un schéma général d'un mode de réalisation de l'invention.

Selon l'invention, une lampe à décharge 1 est placée devant un concentrateur de flux lumineux 2, le concentrateur de flux lumineux 2 a pour effet de concentrer au moins une partie du flux lumineux 3 sur un point focal 4 sur lequel est placé un échantillon d'un verre optique susceptible de produire une émission lumineuse stimulée connue sous le nom de laser. A cet effet, on choisit un matériau optique, tel que du verre, dopé à l'Erbium ou de tout autre dopant destiné à conférer à l'échantillon de verre optique des qualités d'émission lumineuse stimulée.

Classiquement pour réaliser le générateur de faisceau laser, selon l'invention, l'échantillon de verre optique doté de qualités d'émission lumineuse stimulée est principalement constitué par un barreau d'un verre à l'Erbium 5 placé entre un miroir semi réfléchissant 6, disposé du côté de sortie de l'émission stimulée, et d'un miroir réfléchissant 7 disposé sur la face opposée de façon à constituer un résonateur laser.

Le faisceau de sortie du générateur de faisceau laser est préférentiellement transmis à travers un système optique de sortie 8 du faisceau laser. Le faisceau laser 9 présente un axe central 10 parfaitement déterminé en fonction de l'axe du résonateur laser 5-7.

La lampe à décharge 1 est alimentée entre ses bornes 12 et 13 par un dispositif électronique convenable (non représenté), bien connu de l'homme de métier.

La lampe à décharge est préférentiellement constituée par une lampe remplie de gaz xénon qui sert de moyens de pompage de l'ion Er³⁺ que l'on peut trouver dans des matrices de verre au phosphate, éventuellement en présence d'autres ions, tels que le chrome, pour améliorer le rendement de pompage.

La lampe à décharge peut être une lampe destinée à l'éclairage de véhicule ou une lampe du même genre couramment dans le commerce, ce qui rend la présente invention réalisable sans investissement élevé.

La lampe à décharge peut être une lampe spécialisée pour le pompage du laser ou être constituée par la lampe à décharge qui sert de source lumineuse pour un projecteur d'éclairage ou un feu de signalisation à l'intérieur duquel est disposé le générateur de faisceau laser.

Dans ce dernier cas, le concentrateur 2 peut être constitué par une zone du réflecteur qui est déjà disposé dans le projecteur ou le feu. De ce fait, les moyens de l'invention n'entraînent qu'une faible augmentation des pièces déjà utilisées dans un phare d'éclairage ou un feu de signalisation.

On a représenté, en particulier dans le cas où la lampe à décharge est partagée entre la fonction d'éclairage et celle de pompage, une optique 14 destinée à produire selon l'axe 15 un flux lumineux d'éclairage 16.

Dans un mode de réalisation, le faisceau laser 9,10 traverse aussi l'optique 14.

Selon l'invention, le dispositif optique comporte aussi un récepteur 17 d'un faisceau laser 18 qui présente des bornes qui sont fournies à l'entrée d'un circuit 18 de détection et d'adaptation du signal. La sortie 19 du circuit de détection et d'adaptation du signal est transmise à un dispositif de contrôle 20 qui est destiné à contrôler le fonctionnement du dispositif d'aide à la conduite de l'invention.

En particulier, le dispositif de contrôle 20 comporte une sortie de commande 21 destinée à réguler le flux lumineux de pompage 3 en fonction notamment du mode de fonctionnement de la lampe à décharge 1, de l'état du concentrateur 2, préalablement détecté par un signal d'état 22 produit par un capteur (non représenté) et renvoyé à une entrée convenable du dispositif de contrôle 20.

Le récepteur 17 du faisceau laser 18 est, dans un mode de réalisation préféré, constitué par un photocomposant apte à transformer les caractéristiques physiques du faisceau laser d'entrée 18 en un signal électrique représentatif desdites caractéristiques.

Le dispositif de contrôle comporte aussi une sortie 23 de commande du système optique de sortie 8 du générateur de faisceau laser. En particulier, dans un mode préféré de réalisation, le système optique de sortie 8 est constitué par une cellule de POCKELS, ou un dispositif modulateur du même genre pouvant notamment servir de valve optique commandée.

Le dispositif de contrôle 20 comporte enfin une sortie 24 qui est transmise à l'entrée d'un dispositif de détection 25, notamment constitué par un circuit spécialisé (comme un processeur de signal commercialement connu sous le sigle DSP pour Digital Signal Processor), ou par un microcontrôleur programmable.

Le dispositif de détection 25 produit en sortie 26 des signaux représentatifs de paramètres d'aide à la navigation, transmis à des circuits de sortie pouvant agir sur des organes de confort ou de sécurité du véhicule comme un circuit de freinage prioritaire, un circuit de réglage du papillon d'admission du carburateur, un circuit de pilotage automatique, etc. ou pouvant agir sur des organes d'alarme comme des messageries vocales, des voyants lumineux, ou des messages apparaissant sur l'écran de l'ordinateur de bord embarqué dans le véhicule.

A la figure 2, on a représenté un mode de réalisation d'un concentrateur adapté au générateur de faisceau laser selon l'invention. Un tel concentrateur 2 présente un axe focal 11 sur lequel se trouve un premier foyer 1 et un second foyer 4 au centre desquels sont respectivement placés la lampe à décharge et le barreau de verre 5. En choisissant un réflecteur elliptique, un rayon 30 émis par la lampe sur le point foyer 1 se réfléchit au point 31 du réflecteur en un rayon réfléchi 32 qui vient sur le foyer 4 sur le barreau de verre dopé à l'Erbium 5. Le faisceau laser est produit dans la direction 10 à travers le miroir semi réfléchissant 6 (non représenté à la figure 2).

A la figure 3, on a représenté un autre mode de réalisation d'un générateur de faisceau laser selon l'invention. A la figure, les mêmes éléments que ceux des figures précédentes portent les mêmes numéros de référence et ne seront pas plus décrits.

Dans ce mode de réalisation, la lampe à décharge est placée au foyer 1 et le rayonnement de pompage traverse la surface d'un échantillon de matériau, tel que du verre 36, dopé à l'Erbium qui est recouvert sur sa face se sortie d'une couche d'un élément absorbant saturable à la longueur d'onde d'émission du laser.

La substance semi absorbante déposée sur la face de sortie du disque 36 permet de constituer un résonateur optique avec sa face d'entrée. Un miroir 38 sert aussi à produire un rayonnement de sortie en lumière stimulée 39 d'axe 40. Dans ce mode de réalisation, on peut aussi prévoir de monter le miroir réfléchissant 38 de façon oscillante sur un support 41 asservi par un système électromécanique 42 qui reçoit une information de commande 43 du dispositif de contrôle 20. Un tel système électromécanique peut utiliser un effet piezo-électrique pour réaliser un micro-balayage du faisceau 39.

Dans un mode de réalisation de l'invention, le récepteur n'est pas constitué seulement par un photocomposant mais aussi par un générateur de faisceau laser, analogue à ceux des modes de réalisation des figures 1 et 2, mais fonctionnant en amplificateur.

Dans ce mode de réalisation, le faisceau laser traverse le barreau de verre à l'Erbium pour produire une émission secondaire de flux lumineux, dont les caractéristiques sont une représentation des caractéristiques optiques du faisceau laser reçu.

Dans ce cas, on utilise un capteur du flux lumineux d'émission secondaire pour détecter un signal représentatif des caractéristiques optiques du faisceau laser reçu.

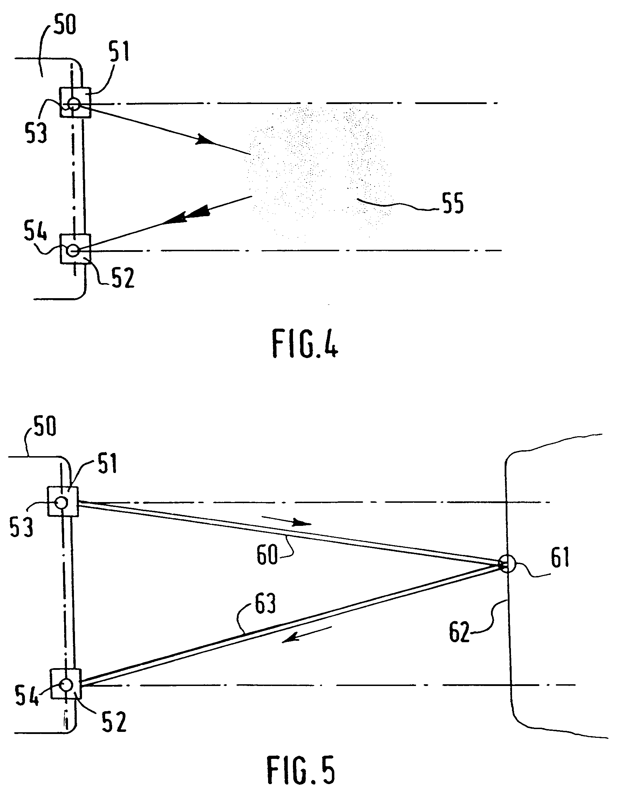

Aux figures 4 et 5 on a représenté deux fonctionnements du dispositif d'aide à la navigation quand il est installé dans les projecteurs d'éclairage d'un véhicule.

Cependant l'invention n'est pas exclusive du cas où le faisceau laser est produit ou bien par une borne fixe disposée sur le bord de la route par exemple, ou bien par un générateur embarqué à bord d'un véhicule voisin.

A la figure 4, on a représenté un véhicule 50 qui présente deux projecteurs d'éclairage 51 et 52 dotés chacun d'un générateur laser 53 et d'un détecteur laser 54. Devant le véhicule se trouve une zone de brouillard 55 qui est rétrodiffusante pour la gamme de longueurs d'ondes produite par le générateur 53.

Par démodulation synchrone dans le dispositif de détection 25 de la figure 1, on est capable à l'aide d'un circuit de détection de brouillard de générer un signal de détection de brouillard, notamment pour allumer un feu de brouillard.

A la figure 5, on a représenté un mode de réalisation de l'invention utilisé en télémétrie. Le générateur laser embarqué à bord du véhicule 50 produit un faisceau incident 60 qui vient frapper une zone arrière 61 d'un véhicule 62. Le faisceau réfléchi 63 est détecté par le photocomposant de détection 54 et le circuit de détection 25 permet de déduire la distance inter-véhicule et éventuellement la vitesse relative, le changement de files de circulation, etc on peut déduire de ces paramètres des signaux d'alarme en cas de ralentissement brutal par exemple.

Dans d'autres applications, le faisceau laser d'émission est dirigé sur la surface de la chaussée devant le véhicule de façon à détecter :
- l'état de la chaussée,
- la présence de verglas,
- etc.

Selon l'invention, le circuit de détection est programmé de façon à pouvoir fonctionner en mode DOPPLER. Dans ce cas, on peut produire une récurrence de signaux lumineux laser et observer le décalage fréquentiel de la récurrence des signaux lumineux laser reçus pour en déduire des informations de vitesse, puis, par intégration, des informations de position.

Le dispositif de contrôle 20 permet de faire fonctionner le générateur laser en mode continu ou en mode impulsionnel :
- ou bien en contrôlant l'allumage de la lampe à décharge de pompage, ou l'état optique du concentrateur,
- ou bien en contrôlant la caractéristique optique du système de sortie 8.

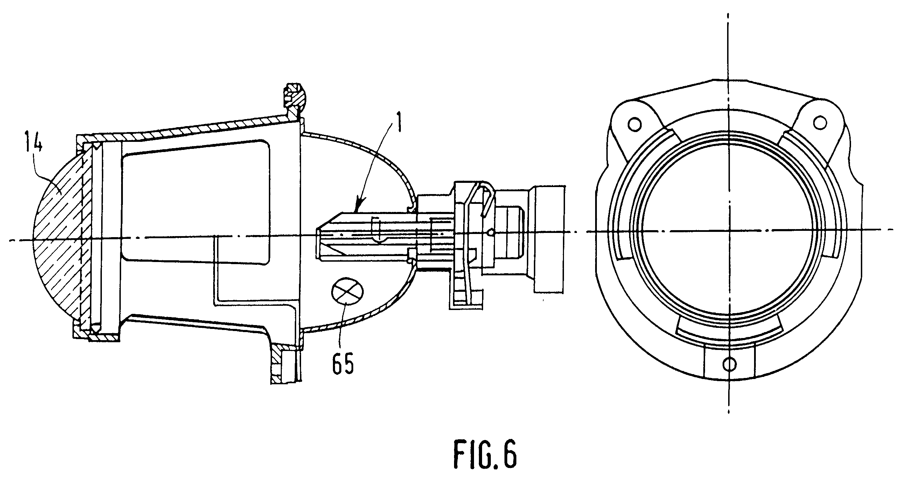

A la figure 6, on a représenté deux vues respectivement de côté et de face d'un projecteur d'éclairage incorporant une lampe à décharge 1 et une optique de sortie 14. Une partie du flux lumineux est renvoyée vers le générateur laser 65 disposé à l'intérieur du projecteur.

## Revendications

1. Dispositif optique d'aide à la conduite pour véhicule automobile notamment, ce dispositif comportant :
- au moins un générateur (5,6,7) d'un faisceau laser dans une direction déterminée à une longueur d'onde et sous une énergie ou une puissance compatible avec la sécurité oculaire ;
- au moins une lampe à décharge (1) du genre comportant un gaz rare, comme du Xénon ;
- un échantillon d'un matériau optique dopé à l'Erbium (5) ou avec au moins un dopant destiné à conférer à l'échantillon de matériau optique des qualités d'émission lumineuse stimulée ;
- un système optique (2) de concentration de flux lumineux généré par la lampe à décharge (1) sur l'échantillon de matériau optique (5);
- un système optique de sortie (8) du faisceau laser (9);
- et un récepteur (17) de faisceau laser.

2. Dispositif selon la revendication 1 caractérisé en ce qu'il est placé dans un projecteur (51,52) du véhicule.

3. Dispositif selon la revendication 1 caractérisé en ce que l'émetteur est placé dans un premier projecteur (51) et en ce que le récepteur est placé dans un second projecteur (52).

4. Dispositif selon la revendication 3 caractérisé en ce que la détection exploite un schéma hétérodyne.

5. Dispositif selon l'une quelconque des revendications précédentes caractérisé en ce que le matériau optique dopé est un verre dopé à l'Erbium (5).

6. Dispositif selon l'une quelconque des revendications précédentes caractérisé en ce que le récepteur du faisceau laser est constitué par un photocomposant basé sur les systèmes AsGa ou InP.

7. Dispositif selon l'une quelconque des revendications précédentes caractérisé en ce que le récepteur du faisceau laser est constitué par un générateur laser, par exemple à matériau dopé à l'Erbium, fonctionnant en amplificateur et recevant l'émission lumineuse induite par son éclairement laser.

8. Dispositif selon l'une quelconque des revendications précédentes caractérisé en ce qu'il comporte aussi un dispositif de contrôle (20) déterminant les caractéristiques et le mode opératoire du générateur et du récepteur.

9. Dispositif selon l'une quelconque des revendications précédentes caractérisé en ce qu'il comporte aussi un dispositif de détection (25) produisant des paramètres d'aide à la navigation, comme ceux basés sur la détection d'énergie rétrodiffusée ou rétroréfléchie par un milieu (55) ou une cible (62) disposée en face au moins du récepteur, le fonctionnement de ces mesures pouvant se faire en mode DOPPLER.

10. Dispositif selon l'une des revendications précédentes caractérisé en ce que la lampe à décharge (1) est partagée entre la fonction d'éclairage et celle de pompage de la source laser, une optique (14) étant destinée à produire un flux lumineux d'éclairage (16).

11. Dispositif selon la revendication 10 caractérisé en ce que le faisceau laser (9) traverse aussi l'optique (14) destinée à produire le flux lumineux d'éclairage (16).
